# EUROPEAN PATENT APPLICATION

(11) **EP 4 524 708 A1**
(43) Date of publication of application: **19.03.2025**
(21) Application number: 23887965.4
(22) Date of filing: 06.11.2023
(51) Int. Cl.: G06F 3/04842

(54) **MEDIA CONTENT PROCESSING METHOD AND APPARATUS, DEVICE, READABLE STORAGE MEDIUM, AND PRODUCT**

(30) Priority: 09.11.2022 CN 202211401432
(71) Applicant: Beijing Zitiao Network Technology Co., Ltd., Beijing 100190 (CN)
(72) Inventor: LI, Zhenan, Beijing 100028 (CN); ZHANG, Nuomeng, Beijing 100028 (CN); SUN, Hui, Beijing 100028 (CN); ZHENG, Ziyang, Beijing 100028 (CN); WU, Yiying, Beijing 100028 (CN); LIU, Yiran, Beijing 100028 (CN)
(74) Representative: Grünecker Patent- und Rechtsanwälte PartG mbB
(86) International application number: PCT/CN2023/129975
(87) International publication number: WO 2024/099275

(57) **Abstract**

Embodiments of the present disclosure provides a method, an apparatus, a device, a readable storage medium and a product for media content processing, and the method includes steps of: displaying a media content generation interface; obtaining interactive media content generated by a first user on the media content generation interface, wherein the interactive media content includes media content generated by the first user and a preset function control corresponding to a preset interactive operation, and the preset function control includes topic information associated with the interactive media content; determining at least one second user selected by the first user based on the media content generation interface; and posting the interactive media content, so that the at least one second user receives first interactive reminder information associated with the preset interactive operation, the first interactive reminder information including the topic information.

## Description

**This** application claims the benefit of Chinese Patent Application No. 202211401432.4, entitled "Method, Apparatus, Device, Readable Storage Medium, and Product for Media Content Processing" filed on Nov. 9, 2022, the entire content of which is incorporated herein by reference.

### FIELD

The embodiment of the invention relates to the field of interface interaction technology, in particular to a method, an apparatus, a device, a readable storage medium and a product for media content processing.

### BACKGROUND

**In** existing video software, users are generally supported to create and post video media content according to actual requirements.

However, the difficulty of generating the media content in the foregoing media content generation manner is relatively high, and the existing video media content is generally independent media content, and other users can only view the media content, but cannot perform an interactive operation based on the media content.

### SUMMARY

The embodiment of the present disclosure provides a method, an apparatus, a device, a readable storage medium and a product for media content processing, which are used for solving the problem that an existing media content interaction mode is relatively simple.

According to a first aspect, an embodiment of the present disclosure provides a method for media content processing, including: displaying a media content generation interface; obtaining interactive media content generated by a first user on the media content generation interface, where the interactive media content includes media content generated by the first user and a preset function control corresponding to a preset interactive operation, and the preset function control includes topic information associated with the interactive media content; determining at least one second user selected by the first user based on the media content generation interface; and posting the interactive media content, to cause the at least one second user to receive first interactive reminder information associated with the preset interactive operation, the first interactive reminder information including the topic information.

According to a second aspect, an embodiment of the present disclosure provides a method for media content processing, including: determining whether a third user has posted media content associated with a topic information of interactive media content based on a preset interactive operation, and obtaining a post result; determining a display style of a preset function control included in the interactive media content according to the post result; and displaying interactive media content including the preset function control based on the display style..

According to a third aspect, an embodiment of the present disclosure provides a media content processing apparatus, including: a displaying module configured to display a media content generation interface; an obtaining module configured to obtain interactive media content generated by a first user on the media content generation interface, wherein the interactive media content includes media content generated by the first user and a preset function control corresponding to a preset interactive operation, and the preset function control includes topic information associated with the interactive media content; a determining module configured to determine at least one second user selected by the first user based on the media content generation interface; and a posting module configured to post the interactive media content, to cause the at least one second user to receive first interactive reminder information associated with the preset interactive operation, the first interactive reminder information including the topic information.

According to a fourth aspect, an embodiment of the present disclosure provides an apparatus for displaying interactive media content, including: a post result obtaining module configured to determine whether a third user has posted media content associated with a topic information of interactive media content based on a preset interactive operation, and obtain a post result; a display style determining module configured to determine a display style of a preset function control included in the interactive media content according to the post result; and a content displaying module configured to display interactive media content including the preset function control based on the display style.

According to a fifth aspect, an embodiment of the present disclosure provides an electronic device, including: a processor and a memory; the memory stores execution instructions; and the processor executes the computer executable instructions stored in the memory, to cause the at least one processor to execute the method for media content processing according to the first aspect and the possible designs of the first aspect, the second aspect, and the possible designs of the second aspect.

According to a sixth aspect, an embodiment of the present disclosure provides a computer-readable storage medium, where the computer-readable storage medium stores computer-executable instructions therein, and when executing the computer-executable instructions, the processor implements the method for media content processing according to the first aspect and the possible designs of the first aspect or the second aspect and the possible designs of the second aspect.

According to a seventh aspect, an embodiment of the present disclosure provides a computer program product, including a computer program, where the computer program, when executed by a processor, implements the method for media content processing according to the first aspect and the possible designs of the first aspect, the second aspect, and the possible designs of the second aspect.

### BRIEF DESCRIPTION OF DRAWINGS

**In** order to describe the embodiments of the present disclosure or the technical solutions more clearly in the prior art, the accompanying drawings used in the description of the embodiments or the prior art will be briefly introduced below, and it will be apparent that the drawings in the following description are some embodiments of the present disclosure, and those skilled in the art may also acquire other drawings according to these drawings without creative labor.
FIG. 1 is a schematic flowchart of a method for media content processing according to an embodiment of the present disclosure;
FIG. 2 is a schematic diagram of interactive media content according to an embodiment of the present disclosure;
FIG. 3A is a schematic diagram of interface interaction according to an embodiment of the present disclosure;
FIG. 3B is a schematic diagram of still another interface interaction according to an embodiment of the present disclosure;
FIG. 4 is a schematic diagram of still another interface interaction according to an embodiment of the present disclosure;
FIG. 5 is a schematic diagram of still another interface interaction according to an embodiment of the present disclosure;
FIG. 6 is a schematic diagram of still another interface interaction according to an embodiment of the present disclosure;
FIG. 7 is a schematic diagram of still another display interface according to an embodiment of the present disclosure;
FIG. 8 is a schematic diagram of still another interface interaction according to an embodiment of the present disclosure;
FIG. 9 is a schematic flowchart of a method for displaying interactive media content according to an embodiment of the present disclosure;
FIG. 10 is a schematic diagram of a display interface according to an embodiment of the present disclosure;
FIG. 11 is a schematic diagram of still another display interface according to an embodiment of the present disclosure;
FIG. 12 is a schematic diagram of still another interface interaction according to an embodiment of the present disclosure;
FIG. 13 is a schematic structural diagram of an apparatus for media content processing according to an embodiment of the present disclosure;
FIG. 14 is a schematic structural diagram of an apparatus for display interactive media content according to an embodiment of the present disclosure;
FIG. 15 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments acquired by those skilled in the art based on the embodiments of the present disclosure without creative labor shall fall in the scope of the present disclosure.

With respect to the above-mentioned problem that the existing manner for media content interaction is relatively simple, the present disclosure provides a method, an apparatus and device, a readable storage medium, and a product for media content processing.

It should be noted that the method, apparatus, device, readable storage medium, and product for media content processing provided by the present disclosure may be used in scenarios for posting various media content.

It can be understood that, before the technical solutions disclosed in the embodiments of the present disclosure are used, the types of personal information, the usage scope, the usage scenario and the like related to the present disclosure should be notified to the user in an appropriate manner according to the relevant laws and regulations and obtain the authorization of the user.

For example, in response to receiving an active request from a user, prompt information is sent to the user to explicitly prompt the user that the requested operation will need to obtain and use the personal information of the user. Therefore, the user can autonomously select, according to the prompt information, whether to provide personal information to software or hardware executing the operation of the technical solution of the present disclosure, such as the electronic device, application program, server, or storage medium.

As an optional but non-limiting implementation, in response to receiving the active request from the user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

It can be understood that the above notification and user authorization process are only illustrative which do not limit the implementation of this disclosure. Other methods that meet relevant laws and regulations can also be applied to the implementation of this disclosure.

Existing method for media content generation are generally created and posted by users according to current actual needs. After the media content is posted, other users can interact with the media content in a relatively single manner, resulting in poor user experience.

In order to enrich the interaction manner based on the media content and reduce the difficulty of the media content creation, after the user completes the collection of the media content, the preset function control may be added to the media content, and the preset function control includes topic information associated with the interactive media content. Before posting the interactive media content, at least one second user may be determined. The interactive media content is posted, and first interactive reminder information is sent to at least one second user, so that the second user receiving the first interactive reminder information generate target media content associated with the topic information of the interactive media content. Therefore, the creator can interact with a plurality of users through the interactive media content, and a plurality of users are reminded to perform preset interactive operation of the topic information, which enrich the interaction manner of the media content, and can simplify the operation of media content creation.

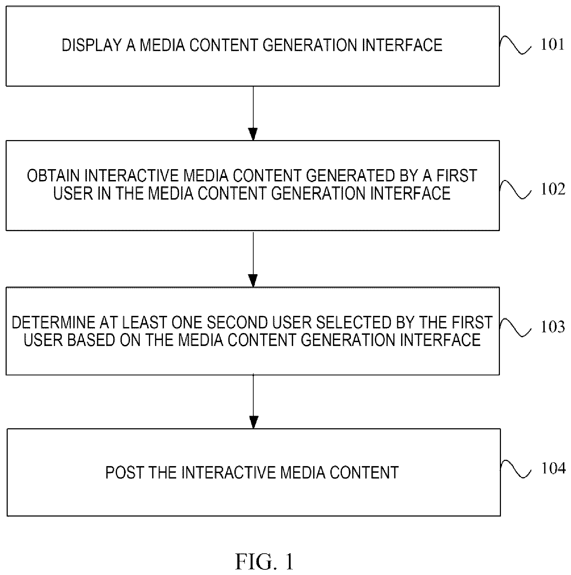

FIG. 1 is a schematic flowchart of a method for media content processing according to an embodiment of the present disclosure.

At step 101, the media content generation interface is displayed.

The execution body of this embodiment is an apparatus for media content processing, and the apparatus for media content processing may be coupled to a terminal device of a first user, to implement processing of the media content based on a trigger operation of the first user.

In this embodiment, the first user may voluntarily create an interactive media content according to an actual creation requirement, so that other users continue to perform an interactive operation based on the interactive media content. Alternatively, the first user may also participate in an interactive operation initiated by other users, and post the interactive media content based on the interactive operation.

To implement generation operation for the interactive media content, the media content generation interface may be first displayed. Optionally, the media content generation interface may include an obtaining control for obtaining media content. The obtaining control may specifically include a media content collection control and/or a media content upload control. In addition, the media content generation interface may further include a preset function control associated with the interactive operation, so that the first user participates in the interactive operation based on the preset function control.

At step 102, interactive media content generated by a first user on the media content generation interface is obtained, where the interactive media content includes media content generated by the first user and a preset function control corresponding to a preset interactive operation, and the preset function control includes topic information associated with the interactive media content.

In this embodiment, after displaying the media content interaction interface, the first user may generate the interactive media content in the media content interaction interface. The interactive media content includes media content generated by the first user and a preset function control corresponding to the preset interactive operation, and the preset function control includes topic information associated with the interactive media content.

Optionally, the first user may implement the obtaining operation for media content by triggering a preset media content acquisition control in the media content generation interface. The first user may determine topic information in the preset function control by customizing the topic information or by using topic information associated with the interactive media content posted by other users.

At Step 103, at least one second user selected by the first user based on the media content generation interface is determined.

In this embodiment, in order to enable more users to participate in the current interactive operation, at least one second user selected by the first user based on the media content generation interface may be determined before posting the interactive media content. The second user may be a user having a preset association relationship with the first user. For example, the second user may be a friend following the first user as well as being followed by the first user.

Optionally, the selection operation of the second user may be performed after the interactive media content is generated, or may be performed before the interactive media content is generated, which is not limited in the present disclosure.

At step 104, the interactive media content is posted, to cause the at least one second to user receive first interactive reminder information associated with the preset interactive operation, where the first interactive reminder information includes the topic information.

In this embodiment, after determining the at least one second user selected by the first user, the interactive media content may be posted. First interactive reminder information associated with a preset interactive operation is sent to the at least one second user, where the first interactive reminder information includes topic information. The interactive reminder information is used to prompt the second user to perform a preset interactive operation to generate media content associated with the topic information.

Correspondingly, after obtaining the first interactive reminder information, the second user may perform the interactive operation of the topic information through the trigger operation of the first interactive reminder information, and post the target media content associated with the topic information.

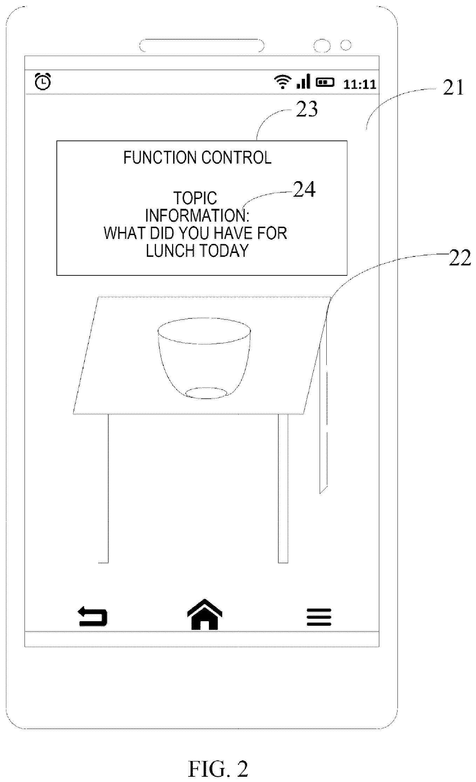

FIG. 2 is a schematic diagram of interactive media content provided by an embodiment of the present disclosure.

It may be understood that the media content may have an association relationship with the topic information. As shown in FIG. 2, the topic information may be "what did you have for lunch today", and correspondingly, the media content may be specifically related to lunch.

According to the method for media content processing provided in this embodiment, the interactive media content generated by the first user is obtained in the media content generation interface, the at least one second user selected by the first user based on the media content generation interface is determined, the interactive media content is posted, and first interactive reminder information is sent to the at least one second user, so that the second user receiving the first interactive reminder information can generate the target media content associated with the topic information of the interactive media content. Therefore, the plurality of users can participate in the preset interactive operation of the topic information, the interaction manner of the media content is enriched, the difficulty of media content creation can be reduced, and the user experience is improved.

Optionally, based on any one of the foregoing embodiments, step 101 includes:
in response to a trigger operation performed by the first user on the media content generation control, switching to the media content generation interface.

In this embodiment, the first user may specifically be an initiator of the interactive operation. The first user may customize the topic information according to actual requirements, or copy topic information posted by other users, and generate the media content associated with the topic information. The interactive media content is generated according to the topic information and the media content.

A media content generation control may be preset in the display interface, and in response to the trigger operation performed by the first user on the media content generation control, the media content generation interface is switched to, so that the first user implements a media content generation operation and a topic information editing operation in the media content generation interface.

Further, on the basis of any one of the above embodiments, the media content generation interface includes a preset content acquisition control and a preset function control associated with the interactive operation. Step 102 includes:
obtaining to-be-posted media content generated by the first user by triggering the content acquisition control, and obtaining the topic information generated by the first user in the preset function control; and
generating the interactive media content according to the to-be-posted media content and the topic information.

In this embodiment, the media content generation interface may include a content acquisition control for obtaining to-be-posted media content. The content acquisition control may specifically include a media content collection control and/or a media content upload control, etc. Optionally, the first user may obtain the to-be-posted media content by triggering the media content collection control to perform real-time collection operation of the media content. Optionally, the first user may obtain the to-be-posted media content by triggering the media content upload control to perform a selection operation on the pre-stored media content.

In addition, the media content generation interface may further include a preset function control associated with the interactive operation. The first user may generate the topic information based on the preset function control. For example, the first user may generate customized topic information in the preset function control.

After respectively obtaining the to-be-posted media content and the topic information generated by the first user in the media content generation interface, the interactive media content may be generated according to the to-be-posted media content and the topic information.

Optionally, the topic information may be displayed in the preset function control, and the preset function control is added to a preset display position in the to-be-posted media content. As an implementation, the first user may adjust content such as a display position and a display effect of the preset function control according to an actual requirement, which is not limited in the present disclosure.

According to the method for media content processing provided in this embodiment, the to-be-posted media content and the topic information are separately obtained, so that the interactive media content associated with the topic information of the interactive operation can be generated. Further, other users can create media content and perform interactive operation based on the interactive media content, which enriches the interaction manner of the interactive media content.

Further, on the basis of any one of the foregoing embodiments, obtaining the topic information generated by the first user in the preset function control includes:
in response to text content input by the first user in an input box preset in the preset function control, determining the text content as the topic information

Alternatively, the media content generation interface further includes a preset random topic generation control, and obtaining the topic information generated by the first user in the preset function control includes:
in response to a trigger operation performed by the first user on the random topic generation control, generating any one of preset random topics; and
determining the random topic as the topic information.

In this embodiment, when the first user is the initiator of the interactive operation corresponding to the preset topic, the preset function control may be added to the media content generation interface, and the preset function control may be provided with an input box. The first user may implement generation of the topic information by triggering the input box. Optionally, in response to the text content input by the first user in the input box preset in the preset function control, the text content may be determined as the topic information.

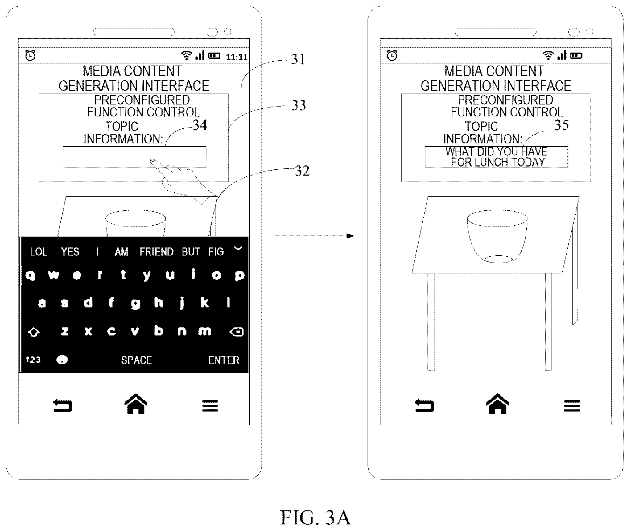

FIG. 3A is a schematic diagram of an interface interaction according to an embodiment of the present disclosure. As shown in FIG. 3A, the interactive media content 31 includes media content 32 generated by the first user, and a function control. The function control 33 includes a preset input box 34. In response to the trigger operation performed by the first user on the preset input box 34, the text content input by the first user may be obtained, and the text content is determined as the topic information 35.

Optionally, in order to improve the generation efficiency of the topic information, a plurality of different random topics may be preset. Correspondingly, the preset function control may be provided with a random topic generation control. The first user may perform a trigger operation on the random topic generation control. In response to the trigger operation, any random topic may be selected from a plurality of preset different random topics and displayed in the preset function control.

The first user may perform a switching operation on the currently displayed random topic according to an actual requirement, and when obtaining a random topic personalized to the user, the random topic may be determined as topic information.

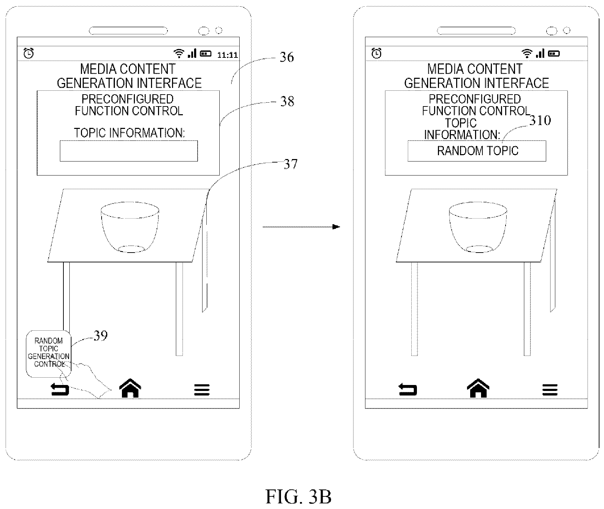

FIG. 3B is another schematic diagram of interface interaction according to an embodiment of the present disclosure, as shown in FIG. 3B, the interactive media content 36 may include media content 37 generated by a first user, a function control 38, and a preset random topic generation control 39. In response to the trigger operation performed by the first user on the random topic generation control 39, any one of preset random topics may be generated, and the random topic is determined as topic information 310.

According to the method for media content processing provided in this embodiment, the topic information is determined based on the text content input by the first user, or the topic information is determined based on the randomly generated random topic, so that the flexibility of the topic information generation can be improved. In addition, by setting the random topic, the first user can be provided with a basis to create interactive media content and the difficulty of media content creation is reduced.

Further, on the basis of any one of the foregoing embodiments, before obtaining the topic information generated by the first user in the preset function control, the method further includes:
in response to a trigger operation performed by the first user on a preset interactive operation control in the media content generation interface, displaying the preset function control in the media content generation interface;
or, the method further includes before obtaining the topic information generated by the first user in the preset function control,
in response to a media content obtaining completion operation triggered by the first user, switching to a media content editing interface, the media content editing interface including a preset interactive operation control;
in response to a trigger operation performed by the first user on the interactive operation control in the media content editing interface, displaying the preset function control in the media content generation interface;
or, the method further includes before obtaining the topic information generated by the first user in the preset function control,
the media content generation interface including a function list, and the function list including a preset interactive operation control;
in response to a trigger operation performed by the first user on the interactive operation control in the function list, displaying the preset function control in the media content generation interface.

In this embodiment, when the first user performs the media content generation operation in the media content generation interface, the preset function control may be added to the media content generation interface according to actual requirements to add the interactive operation.

Optionally, an interactive operation control may be provided in the media content generation interface. In response to the trigger operation performed by the first user on the interactive operation control in the media content generation interface, the preset function control may be displayed in the media content generation interface, so that the first user implements the editing operation of the topic information in the preset function control.

Optionally, the interactive operation control may be set in the media content editing interface. When the first user completes the media content generation operation in the media content generation interface, the media content acquisition completion operation may be triggered. In response to the media content obtaining completion operation, the media content editing interface may be switched to, and the interactive operation control is displayed in the media content editing interface. In response to the trigger operation performed by the first user on the interactive operation control in the media content editing interface, the preset function control may be displayed in the media content editing interface, so that the first user implements the editing operation of the topic information in the preset function control.

Optionally, the media content generation interface may further display a function list, and the function list may include the interactive operation control. In response to the trigger operation performed by the first user on the interactive operation control in the function list, the preset function control may be displayed in the media content generation interface, so that the first user implements the editing operation of the topic information in the preset function control.

According to the method for media content processing provided in this embodiment, the interactive operation control is provided in the media content generation interface, the media content editing interface, or the function list in the media content generation interface, so that the first user can trigger the interactive operation in different interfaces in the process of generating the media content, and the preset function control can be added to the media content based on the trigger operation, so as to generate the interactive media content, thereby improving the efficiency of the interactive media content generation.

Optionally, based on any one of the foregoing embodiments, step 101 includes:
displaying target media content in a media content playing interface, the target media content including a target function control, and the target function control including topic information associated with the target media content; and
in response to a trigger operation performed by the first user in the target function control, displaying the media content generation interface.

Alternatively, the displaying the media content generation interface includes:
obtaining second interactive reminder information associated with the preset interactive operation, the second interactive reminder information including the topic information; and
in response to a trigger operation performed by the first user on the second interactive reminder information, switching to the media content generation interface.

**In** this embodiment, the first user may specifically be a user participating in the interactive operation based on target media content posted by other users.

Optionally, the first user may participate in the interactive operation based on the target function control in the target media content posted by other users. When the first user browses a media content stream in the media content playing interface, the target media content may be displayed in the media content playing interface according to the switching operation by the first user, the target media content includes the target function control, and the target function control includes the topic information associated with the target media content.

**In** response to the trigger operation performed by the first user in the target function control, the media content generation interface is switched to, so that the first user implements the generation operation of the interactive media content in the media content generation interface.

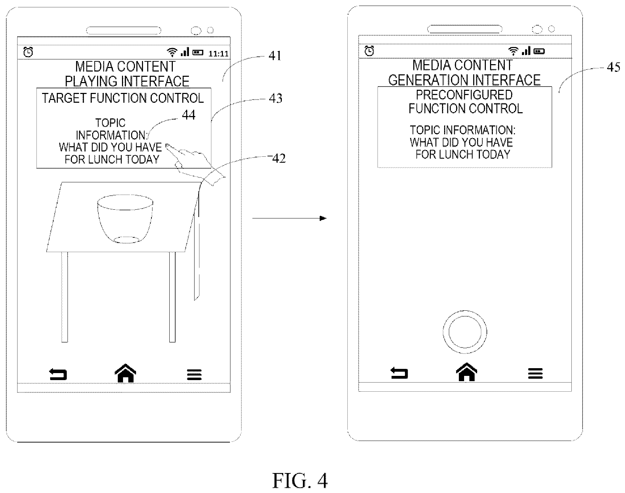

FIG. 4 is a schematic diagram of another interface interaction provided by an embodiment of the present disclosure. As shown in FIG. 4, a target media content 42 is displayed in a media content playing interface 41, the target media content 42 includes a target function control 43, and the target function control 43 includes topic information 44 associated with the target media content. After the first user sees the target media content 42, the media content generation interface 45 may be switched to in response to a trigger operation performed by the first user in the target function control 43.

Optionally, when other users post interactive media content, the user's selection operation may be performed before the interactive media content is posted. When other users select the first user, the second interactive reminder information may be sent to the first user, where the second interactive reminder information includes the topic information.

Correspondingly, when the first user obtains the second interactive reminder information, the media content generation interface may be switched to through the trigger operation on the second interactive reminder information, so that the first user implements the generation operation of the interactive media content in the media content generation interface.

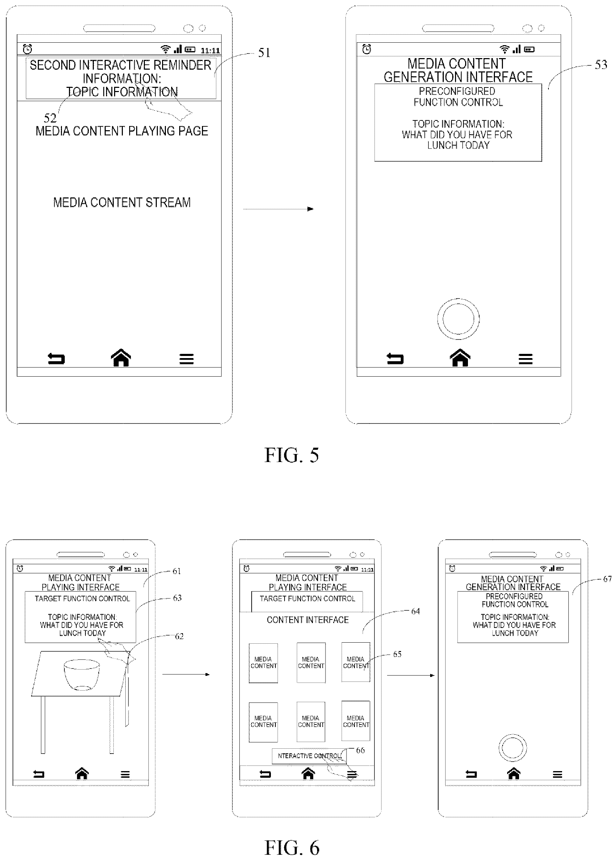

FIG. 5 is a schematic diagram of still another interface interaction according to an embodiment of the present disclosure. As shown in FIG. 5, the first user may obtain a second interactive reminder information 51 associated with a preset interactive operation, and the second interactive reminder information 51 includes a topic message 52. In response to the trigger operation performed by the first user on the second interactive reminder information 51, the media content generation interface 53 may be switched to.

According to the method for media content processing provided in this embodiment, through the trigger operation in the target function control when the target media content including the target function control is browsed, or through the trigger operation on second interactive reminder information when the second interactive reminder information is obtained, the media content generation interface is switched to, so that the first user can quickly generate the interactive media content based on the target media content or the second interactive reminder information, thereby improving the generation efficiency of the interactive media content.

Further, on the basis of any one of the above embodiments, step 102 includes:
obtaining media content generated by the first user on the media content generation interface; and
generating the interactive media content according to the topic information associated with media content and the target media content or the topic information included in the second interactive reminder information.

In this embodiment, after switching to the media content generation interface, the first user may implement the media content generation operation by triggering a media content collection control or a media content upload control preset in the media content generation interface.

Further, since the first user generates the interactive media content based on the target media content or the second interactive reminder information of other users, the first user cannot customize the topic information associated with the interactive media content. Optionally, the topic information associated with the target media content or the topic information included in the second interactive reminder information may be determined as the topic information associated with the currently generated media content. The interactive media content is generated according to the media content and the topic information associated with the target media content or the topic information included in the second interactive reminder information.

According to the method for media content processing provided in this embodiment, the interactive media content is generated according to the media content generated by the first user and the topic information associated with the target media content or the topic information included in the second interactive reminder information, so that the first user can perform the interactive operation based on the target media content posted by other users, which enriches the interaction manner based on the media content and improves the user experience.

Further, on the basis of any one of the foregoing embodiments, the target function control further includes a preset interactive control. Displaying the media content generation interface in response to the trigger operation by the first user in the target function control includes:
in response to a trigger operation performed by the first user on the interactive control, switching to the media content generation interface.

Alternatively, displaying the media content generation interface in response to the trigger operation by the first user in the target function control includes:
in response to a trigger operation performed by the first user on a preset display area in the target function control, displaying a content interface corresponding to the topic information, the content interface including a plurality of pieces of media content associated with the topic information and a preset interactive control; and
in response to a trigger operation performed by the first user on the interactive control in the content interface, switching to the media content generation interface.

In this embodiment, an interactive control may be provided in the target function control in advance. After the target media content is displayed in the media content playing interface, in response to the trigger operation performed by the first user on the interactive control, the media content generation interface may be switched to, so that the first user implements the generation operation of the interactive media content in the media content generation interface.

Optionally, when the trigger operation performed by the first user on the preset display area in the target function control is detected, in response to the trigger operation, a content interface corresponding to the topic information may be displayed, where the content interface includes a plurality of pieces of media content associated with the topic information and a preset interactive control.

In response to the trigger operation performed by the first user on the interactive control in the content interface, the media content generation interface may be switched to, so that the first user implements the generation operation of the interactive media content in the media content generation interface.

FIG. 6 is a schematic diagram of another interface interaction according to an embodiment of the present disclosure. As shown in FIG. 6, a target media content 62 is displayed in the media content playing interface 61, and the target media content 62 includes a target function control 63. In response to the trigger operation performed by the first user on the preset display area in the target function control 63, the content interface 64 corresponding to the topic information may be displayed. The content interface 64 corresponding to the topic information includes a plurality of pieces of media content 65 associated with the topic information and a preset interactive control 66. In response to the trigger operation performed by the first user on the interactive control 66, the media content generation interface 67 may be switched to.

According to the method for media content processing provided in this embodiment, the interactive control is provided in the target function control, or the interactive control is provided in the content interface, so that the first user can flexibly implement the trigger operation on the interactive control, so that the interactive operation can be quickly added, thereby implementing interaction based on the media content.

Further, on the basis of any one of the foregoing embodiments, the target function control further includes a preset interactive control; and displaying the media content generation interface in response to the trigger operation performed by the first user in the target function control includes:
in response to a trigger operation performed by the first user on the interactive control, displaying a preset interactive list, and the interactive list includes a first control and a second control;
in response to a trigger operation performed by the first user on the first control, switching to a first media content generation interface, and the first media content generation interface is configured to generate first interactive media content, where, topic information of the first interactive media content is the same as that of the target media content and there is an association relationship between the first interactive media content and the target media content;
in response to a trigger operation performed by the first user on the second control, switching to a second media content generation interface, and the second media content generation interface being configured to generate second interactive media content, where, topic information of the second interactive media content is the same as that of the interactive media content and there is no association relationship between the second interactive media content and the target media content.

In this embodiment, the target function control further includes a preset interactive control. The first user may participate in an interactive operation posted by another user based on the trigger operation on the interactive control. Alternatively, the first user may also initiate a new interactive operation based on the topic information of the target media content.

Optionally, in response to the trigger operation performed by the first user on the interactive control, a preset interactive list may be displayed, where the interactive list includes a first control and a second control.

The first user may participate in the interactive operation posted by another user through the trigger operation on the first control. Specifically, in response to the trigger operation performed by the first user on the first control, the first media content generation interface may be switched to, and the first media content generation interface is configured to generate the first interactive media content, where topic information of the first interactive media content is the same as that of the target media content and there is an association relationship between the first interactive media content and the target media content.

The first user may initiate a new interactive operation based on the topic information of the target media content through a trigger operation on the second control. Specifically, in response to the trigger operation performed by the first user on the second control, the second media content generation interface is switched to, and the second media content generation interface is configured to generate the second interactive media content, where topic information of the second interactive media content is the same as that of the interactive media content and there is no association relationship between the second interactive media content and the target media content.

According to the method for media content processing provided in this embodiment, the interaction list is displayed in response to the trigger operation performed by the first user on the interactive control, and in response to the selection operation performed by the first user in the interaction list, the media content generation interface for generating different types of interactive media content is switched to. Therefore, the first user can generate different types of interactive media content in different media content generation interfaces, so that the generated interactive media content matches the actual requirement of the first user more, and the user experience is improved.

Further, on the basis of any one of the above embodiments, step 103 includes:
displaying dentification information of a plurality of users having a preset association relationship with the first user in a preset display area of the media content generation interface.
in response to a selection operation performed by the first user on the identification information of the plurality of users, determining the at least one second user selected by the first user.

Alternatively, the preset function control further includes a preset selection control, and determining at least one second user selected by the first user based on the media content generation interface includes:
in response to a trigger operation performed by the first user on the selection control, displaying a user list in the media content generation interface, where the user list includes identification information of a plurality of users having a preset association relationship with the first user.
in response to a selection operation performed by the first user on the identification information of the plurality of users, determining at least one second user selected by the first user.

In this embodiment, before posting the interactive media content, at least one second user needs to be selected.

Optionally, the identification information of the plurality of users having the preset association relationship with the first user may be displayed in the preset display area of the media content generation interface. In response to the selection operation performed by the first user on the plurality of user identification information, the at least one user selected by the first user is determined as the at least one second user.

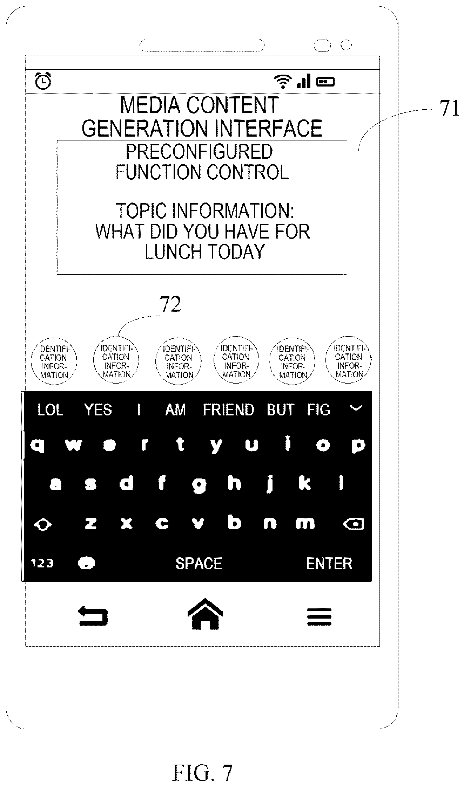

FIG. 7 is a schematic diagram of still another display interface according to an embodiment of the present disclosure. As shown in FIG. 7, the preset display area of the media content generation interface 71 displays identification information 72 of a plurality of users having a preset association relationship with the first user. In response to a selection operation performed by the first user on the identification information 72 of the plurality of users, at least one second user selected by the first user may be determined.

Optionally, the preset function control further includes a preset selection control, and in response to the trigger operation performed by the first user on the selection control, the user list may be displayed in the media content generation interface, where the user list includes identification information of a plurality of users that have a preset association relationship with the first user.

**In** response to a selection operation performed by the first user on the identification information of the plurality of users in the user list, the at least one user selected by the first user is determined as the at least one second user.

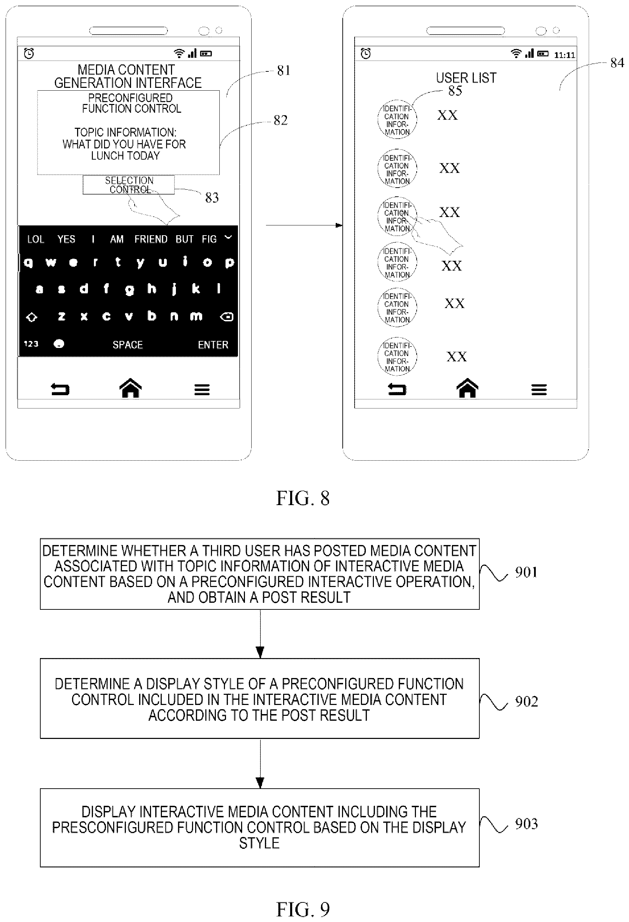

FIG. 8 is a schematic diagram of another interface interaction according to an embodiment of the present disclosure. As shown in FIG. 8, the media content generation interface 81 displays a preset function control 82, and the preset function control 82 also includes a preset selection control 83. In response to the trigger operation performed by the first user on the selection control 83, the user list 84 may be displayed, where the user list 84 includes identification information 85 of a plurality of users having a preset association relationship with the first user. At least one second user selected by the first user is determined in response to a selection operation performed by the first user on the identification information 85 of the plurality of users.

Further, on the basis of any one of the above embodiments, before step 103, the method further includes:
displaying preset first prompt information in the preset function control, the first prompt information being configured to prompt the first user to select at least one second user.

In this embodiment, before the first user selects the at least one second user, in order to enable the user to perform the selection operation of the second user before posting the interactive media content, the preset first prompt information may be displayed in the preset function control. The first prompt information is configured to prompt the first user to select at least one second user.

Further, on the basis of any one of the above embodiments, after step 103, the method further includes:
displaying preset second prompt information in the preset function control, the second prompt information being configured to prompt the second user for the number of second users currently selected.

In this embodiment, after the first user selects the at least one second user, in order to make the first user more intuitively determine the currently selected second user, the preset second prompt information may be displayed in the preset function control, where the second prompt information is configured to prompt the second user for the number of second users currently selected. For example, the second prompt information may be "currently selected three friends".

According to the method for media content processing provided in this embodiment, before posting the interactive media content, at least one second user is selected, so that at least one second user can participate in the current interactive operation, to implement interaction operation based on the interactive media content.

Further, on the basis of any one of the above embodiments, after step 104, the method further includes at least one of the following:
in response to detecting that any one of second users posts media content associated with the topic information based on the interactive media content, sending preset first reminder information to the first user;
in response to detecting that any one of users having a preset association relationship with the first user posts media content associated with the topic information, sending preset first reminder information to the first user; and
in response to detecting that any one of users having no preset association relationship with the first user sends media content associated with the topic information, sending preset second reminder information to the first user.

In this embodiment, in order to enable the first user to know the participation situation of other users in the interactive operation in time, after detecting that another user posts the media content based on the interactive media content, the reminder information may be sent to the first user.

Optionally, if it is detected that any second user selected by the first user posts the media content associated with the topic information based on the interactive media content, the preset first reminder information is sent to the first user. If it is detected that any user having a preset association relationship with the first user but not the second user posts the media content associated with the topic information, the preset first reminder information is sent to the first user. If it is detected that any user that does not have the preset association relationship with the first user sends the media content associated with the topic information, the preset second reminder information is sent to the first user.

The reminding intensity of the first reminder information is greater than that of the second reminder information. For example, the first reminder information may be a banner reminder and a separate message reminder. The second reminder information may be an aggregated message reminder.

According to the method for media content processing provided in this embodiment, different types of reminder information are sent to the first user according to different identities of users who post the media content associated with the topic information, so that the first user can determine the participation situation of other users in the interactive operation based on the reminder information. In addition, it is possible to avoid disturbing the first user by sending a large amount of reminder information to the first user, which improves the user experience., and the user experience is improved.

FIG. 9 is a schematic flowchart of a method for displaying interactive media content according to an embodiment of the present disclosure. As shown in FIG. 9, the method includes:
At step 901, whether a third user has posted media content associated with a topic information of the interactive media content based on a preset interactive operation is determined, and a post result is obtained.

At step 902, a display style of a preset function control included in the interactive media content is determined according to the post result.

At step 903, interactive media content including the preset function control is displayed based on the display style.

The executing body of this embodiment is an apparatus for displaying interactive media content, and the apparatus for displaying interactive media content may be coupled to the terminal device of the third user. Therefore, the display operation of the interactive media content can be performed based on the trigger operation of the third user.

In this embodiment, before displaying the interactive media content, it may first be determined whether the third user has posted the media content associated with the topic information of the interactive media content based on a preset interactive operation, and a post result is obtained. It should be noted that the third user may be an initiator of the interactive operation, or may be another user who sees the interactive media content.

In order to enrich the display effect of the preset function control, display styles matching the post result may be preset for different release results. Therefore, after determining the post result, the display style of the preset function control in the interactive media content matching the post result may be determined according to the post result. A display operation of the interactive media content including the preset function control may be performed according to the display style.

Further, on the basis of any one of the above embodiments, step 903 includes:
in response to determining that the third user has posted the media content associated with the topic information of the interactive media content based on the preset interactive operation, displaying the user identification in a preset position in the preset function control.

In this embodiment, if it is detected that the third user has posted the media content associated with the topic information of the interactive media content based on the preset interactive operation, the user identification of the third user may be displayed in the preset position in the preset function control.

Optionally, if the third user is the initiator of the interactive operation, the preset position may be the first display position.

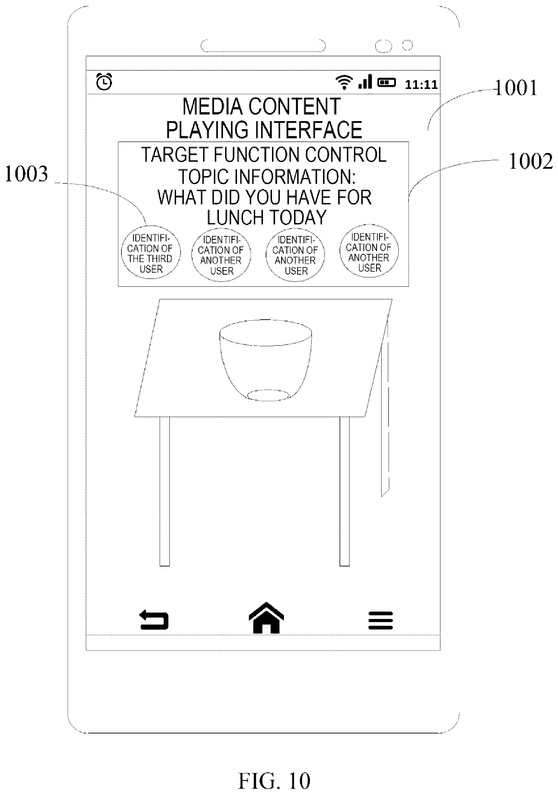

FIG. 10 is a schematic diagram of a display interface according to an embodiment of the present disclosure. The identifications of other users are displayed in sequence after the first display position according to a preset sorting rule.

Optionally, if the third user is a participant of the interactive operation, the preset position may be a display position at the end. In addition, the user identifier of the initiator of the interactive operation may be displayed at the first display position.

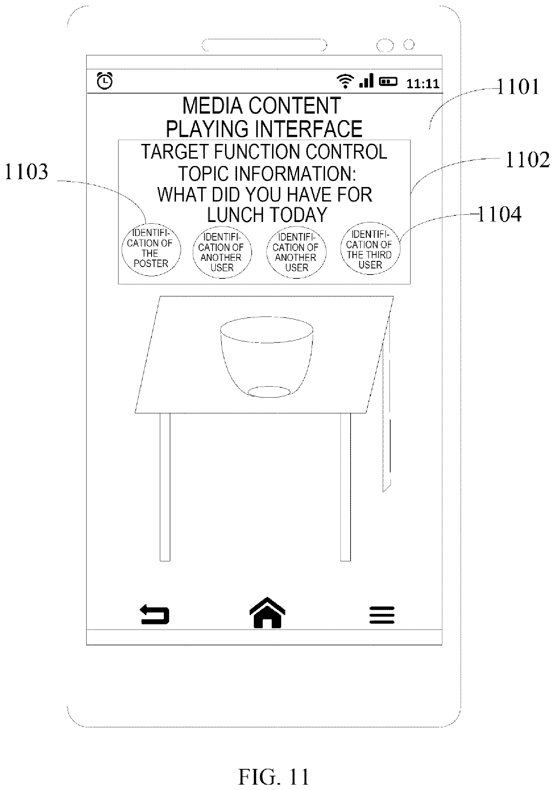

FIG. 11 is a schematic diagram of still another display interface according to an embodiment of the present disclosure, as shown in FIG. 11, if the third user is not a poster of the interactive media content 1101, after the interactive media content 1101 is posted, the identification 1103 of the poster may be displayed at the first display position in the preset function control 1102, and the identification 1104 of the third user may be displayed at the last display position.

According to the method for media content processing provided in this embodiment, before posting the interactive media content, whether a third user has posted media content associated with a topic information of the interactive media content based on a preset interactive operation is determined, and different display styles of the preset function control are determined according to the post result, so that the display effect of the preset function control can be enriched.

Further, on the basis of any one of the above embodiments, the method further includes after displaying the interactive media content including the preset function control based on the display style:
in response to a trigger operation performed by the third user on a preset display area in a preset function control corresponding to the interactive media content, displaying a content interface corresponding to the topic information, the content interface including a plurality of pieces of media content associated with the topic information.

In this embodiment, after the interactive media content is displayed, the third user may trigger the preset function control corresponding to the interactive media content. In response to the trigger operation, a content interface corresponding to the topic information may be displayed. The content interface includes a plurality of pieces of media content associated with the topic information.

Optionally, in order to enable the third user to browse higher quality and more diversified media contents in the content interface, in the content interface, the media content posted by the same user does not exceed a preset number threshold.

Further, on the basis of any one of the above embodiments, the method further includes, after displaying the content interface corresponding to the topic information:
determining post time and/or a number of cumulative interactions corresponding to each piece of media content associated with the topic information; and
adjusting a display order of the plurality of pieces of media content associated with the topic information in the content interface according to the post time and/or the number of cumulative interactions.

In this embodiment, the post time and/or the number of cumulative interactions corresponding to each piece of media content associated with the topic information may be determined respectively. The display order of the media content in the content interface may be adjusted according to the post time and/or the number of cumulative interactions, so that the third user can browse higher quality and more diversified media contents in the content interface.

Optionally, the order of the second users selected by the poster of the interactive media content before posting the interactive media content may be determined, and the media content posted by the second users is preferentially displayed in the content interface.

According to the method for media content processing provided by the embodiment, the media content in the content interface is adjusted according to the post time and/or the number of cumulative interactions corresponding to each piece of media content associated with the topic information, so that the third user can see more high-quality and diversified media content in the content interface, and the user experience is improved.

Further, on the basis of any one of the above embodiments, the method further includes after displaying the content interface corresponding to the topic information:
in response to a trigger operation performed by the third user on any media content associated with the topic information, switching to a media content playing interface; and
playing the media content in the media content playing interface.

In this embodiment, the third user may browse the media content in the content interface according to actual requirements.

The media content playing interface is switched to in response to a trigger operation performed by the third user on any media content associated with the topic information. The media content is played in the media content playing interface.

Optionally, the associated media content stream may be formed according to the plurality of pieces of media content associated with the topic information. The media content playing interface is switched to in response to a trigger operation performed by the third user on any media content associated with the topic information. The associated media content stream is played in the media content playing interface.

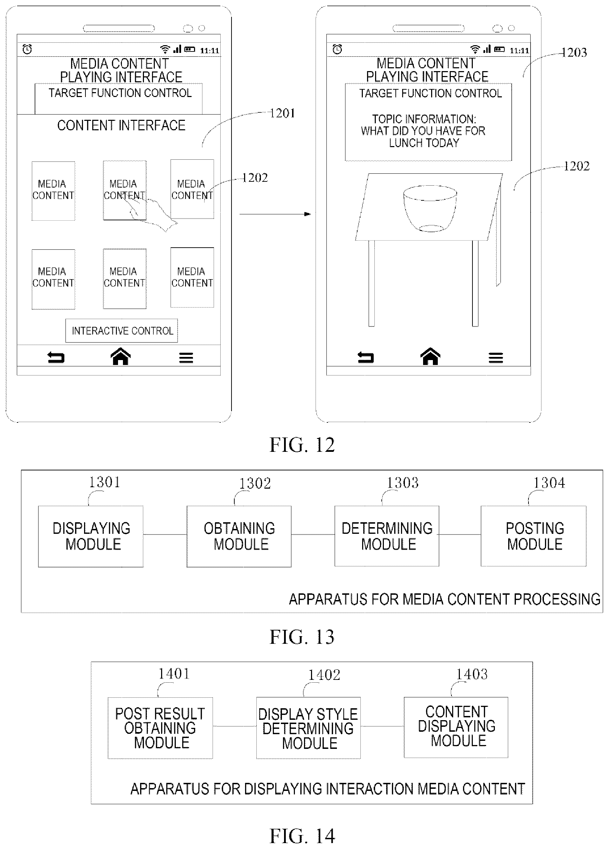

FIG. 12 is a schematic diagram of still another interface interaction according to an embodiment of the present disclosure. As shown in FIG. 12, the content interface 1201 includes a plurality of pieces of media contents 1202 associated with the topic information. In response to a trigger operation performed by the third user on any media content 1202, the media content playing interface 1203 may be switched to, and the media content 1202 may be played in the media content playing interface 1203.

Further, on the basis of any one of the above embodiments, the method further includes after playing the media content in the media content playing interface:

In response to a switching operation performed by the third user for the media content playing interface, switching, in the media content playing interface, to display other media content of the plurality of pieces of media content associated with the topic information.

In this embodiment, after playing the media content associated with the topic information in the media content playing interface in response to the trigger operation performed by the third user on any media content associated with the topic information, the third user may perform a switching operation on the currently played media content according to the actual requirement.

Optionally, in response to a switching operation performed by the third user for the media content playing interface, other media content of the plurality of pieces of media content associated with the topic information is switched to be displayed in the media content playing interface.

According to the method for media content processing provided by the embodiment, the media content stream associated with the topic information is entered in response to the trigger operation performed by the third user on any media content in the content interface, so that the third user can browse more media content associated with the topic information in the media content playing interface, the browsing process of the media content associated with the topic information is simplified, and the user experience is improved.

FIG. 13 is a schematic structural diagram of an apparatus for media content processing according to an embodiment of the present disclosure. As shown in FIG. 13, the apparatus includes: a displaying module 1301, an obtaining module 1302, a determining module 1303, and a posting module 1304. The displaying module 1301 is configured to display the media content generation interface. The obtaining module 1302 is configured to obtain interactive media content generated by a first user on the media content generation interface, where the interactive media content includes media content generated by the first user and a preset function control corresponding to a preset interactive operation, and the preset function control includes topic information associated with the interactive media content. The determining module 1303 is configured to determine at least one second user selected by the first user based on the media content generation interface. The posting module 1304 is configured to post the interactive media content, so that at least one second user receives first interactive reminder information associated with the preset interactive operation, the first interactive reminder information including the topic information.

Further, on the basis of any one of the above embodiments, the displaying module is configured to switch to the media content generation interface in response to a trigger operation performed by the first user on the media content generation control.

Further, on the basis of any one of the above embodiments, the media content generation interface includes a preset content acquisition control and a preset function control associated with the interactive operation. The obtaining module is configured to obtain to-be-posted media content generated by the first user by triggering the content acquisition control, and obtain topic information generated by the first user in the preset function control; and generate the interactive media content according to the to-be-posted media content and the topic information.

Further, on the basis of any one of the foregoing embodiments, the obtaining module is configured to determine: in response to text content input by the first user in an input box preset in the preset function control, the text content as the topic information. Alternatively, the media content generation interface further includes a preset random topic generation control, and the obtaining module is configured to: in response to the trigger operation performed by the first user on the random topic generation control, generate any preset random topic; and determine the random topic as the topic information.

Further, on the basis of any one of the above embodiments, the apparatus further includes: a displaying module configured to display, in response to a trigger operation performed by the first user on a preset interactive operation control in the media content generation interface, the preset function control in the media content generation interface. Alternatively, the apparatus further includes: an interface switching module, configured to switch to a media content editing interface in response to a media content obtaining completion operation triggered by the first user, where the media content editing interface includes a preset interactive operation control; and a displaying module configured to display the preset function control in the media content generation interface in response to a trigger operation performed by the first user on the interactive operation control in the media content editing interface. Alternatively, the apparatus further includes: the media content generation interface including a function list, and the function list including a preset interactive operation control; a displaying module configured to display the preset function control in the media content generation interface in response to a trigger operation performed by the first user on the interactive operation control in the function list.

Further, on the basis of any one of the foregoing embodiments, the displaying module is configured to display target media content in a media content playing interface, where the target media content includes a target function control, and the target function control includes topic information associated with the target media content. The media content generation interface is displayed in response to a trigger operation performed by the first user in the target function control. Alternatively, the displaying module is configured to obtain second interactive reminder information associated with the preset interactive operation, where the second interactive reminder information includes the topic information. The media content generation interface is switched to in response to a trigger operation performed by the first user on the second interactive reminder information.

Further, on the basis of any one of the foregoing embodiments, the obtaining module is configured to obtain media content generated by the first user on the media content generation interface; and generate the interactive media content according to the media content and the topic information associated with the target media content or the topic information included in the second interactive reminder information.

Further, on the basis of any one of the foregoing embodiments, the target function control further includes a preset interactive control. The displaying module is configured to switch to the media content generation interface in response to a trigger operation performed by the first user on the interactive control. Alternatively, the displaying module is configured to display, in response to a trigger operation performed by the first user on a preset display area in the target function control, a content interface corresponding to the topic information, where the content interface includes a plurality of pieces of media content associated with the topic information and a preset interactive control; and switch to the media content generation interface in response to the trigger operation performed by the first user on the interactive control in the content interface.

Further, on the basis of any one of the foregoing embodiments, the target function control further includes a preset interactive control. The displaying module is configured to display a preset interactive list in response to a trigger operation performed by the first user on the interactive control, where the interactive list includes a first control and a second control; switch to a first media content generation interface in response to a trigger operation performed by the first user on the first control, where the first media content generation interface is configured to generate first interactive media content, topic information of the first interactive media content is the same as that of the target media content and there is an association relationship between the first interactive media content and the target media content; and switching to a second media content generation interface in response to a trigger operation performed by the first user on the second control, switching to a second media content generation interface, where the second media content generation interface is configured to generate second interactive media content, topic information of the second interactive media content is the same as that of the interactive media content and there is no association relationship between the second interactive media content and the target media content.

Further, on the basis of any one of the above embodiments, the determining module is configured to display identification information of a plurality of users having a preset association relationship with the first user in a preset display area of the media content generation interface; determine at least one second user selected by the first user in response to a selection operation performed by the first user on the identification information of the plurality of users. Alternatively, the preset function control further includes a preset selection control, and the determining module is configured to: in response to a trigger operation performed by the first user on the selection control, display a user list in the media content generation interface, wherein the user list includes identification information of a plurality of users having a preset association relationship with the first user; and in response to a selection operation performed by the first user on the identification information of the plurality of users, determine at least one second user selected by the first user.

Further, on the basis of any one of the foregoing embodiments, the apparatus further includes: a displaying module configured to preset first prompt information in the preset function control, and the first prompt information is configured to prompt the first user to select at least one second user.

Further, on the basis of any one of the foregoing embodiments, the apparatus further includes: a displaying module configured to display preset second prompt information in the preset function control, the second prompt information being configured to prompt the second user for the number of second users currently selected.

Further, on the basis of any one of the foregoing embodiments, the apparatus further includes a detecting module, where the detecting module is configured to perform at least one of the following: the detection module is configured to send, in response to detecting that any one of second users posts media content associated with the topic information based on the interactive media content, preset first reminder information to the first user. The detecting module is configured to send, when detecting that any one of users having a preset association relationship with the first user posts media content associated with the topic information, preset first reminder information to the first user. The detecting module is configured to send, in response to detecting that any one of users having no preset association relationship with the first user sends media content associated with the topic information, preset second reminder information to the first user.

Further, on the basis of any one of the above embodiments, the interactive reminder information is configured to prompt the second user to perform the preset interactive operation to generate media content associated with the topic information.

FIG. 14 is a schematic structural diagram of an apparatus for displaying interactive media content according to an embodiment of the present disclosure. As shown in FIG. 14, the apparatus for displaying interactive media content includes a post result obtaining module 1401, a display style determining module 1402, and a content displaying module 1403. The post result obtaining module 1401 is configured to determine whether a third user has posted media content associated with a topic information of interactive media content based on a preset interactive operation, and obtain a post result. The display style determining module 1402 is configured to determine a display style of a preset function control included in the interactive media content according to the post result. The content displaying module 1403 is configured to display interactive media content including the preset function control based on the display style.

Further, on the basis of any one of the above embodiments, the display style determining module is configured to display, in response to determining that the third user has posted the media content associated with the topic information of the interactive media content based on the preset interactive operation, user identification at a preset position in the preset function control. The apparatus further includes a content displaying module configured to display, in response to a trigger operation performed by the third user on a preset display area in a preset function control corresponding to the interactive media content, a content interface corresponding to the topic information, the content interface including a plurality of pieces of media content associated with the topic information.

Further, on the basis of any one of the foregoing embodiments, the apparatus further includes: a content determining module configured to determine post time and/or a number of cumulative interactions corresponding to each piece of media content associated with the topic information; and an adjusting module configured to adjust a display order of the plurality of pieces of media content associated with the topic information in the content interface according to the post time and/or the number of cumulative interactions.

Further, on the basis of any one of the above embodiments, the apparatus further includes: a switching module configured to switch to a media content playing interface in response to a trigger operation performed by the third user on any piece of media content associated with the topic information.

A playing module is configured to play the media content in the media content playing interface.

Further, on the basis of any one of the foregoing embodiments, the apparatus further includes: a playing module configured to switch, in the media content playing interface, to display other media content in the plurality of pieces of media content associated with the topic information, in response to a switching operation performed by the third user for the media content playing interface.

The device provided in this embodiment may be configured to perform the technical solutions in the foregoing method embodiments, and implementation principles and technical effects thereof are similar, and details are not described herein again in this embodiment.

Yet another embodiment of the present disclosure further provides an electronic device, including: a processor and a memory.

The memory stores computer-executable instructions.

The processor executes the computer-executable instructions stored in the memory, to cause the processor to execute the method for media content processing and for displaying interactive media content according to any one of the above embodiments.

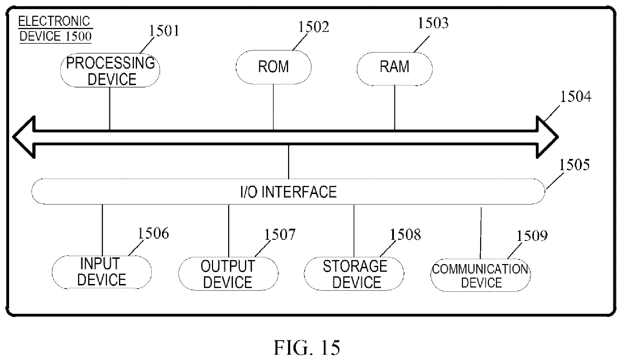

FIG. 15 is a schematic structural diagram of an electronic device according to an embodiment of the present disclosure. As shown in FIG. 15, he electronic device 1500 may be a terminal device or a server. The terminal device may include, but is not limited to, a mobile terminal such as a mobile phone, a laptop computer, a digital broadcast receiver, a personal digital assistant (Personal Digital Assistant, PDA for short), a tablet computer (Portable Android Device, PAD for short), a portable multimedia player (Portable Media Player, PMP for short), a vehicle-mounted terminal (for example, a vehicle-mounted navigation terminal), and the like, and a fixed terminal such as a digital TV, a desktop computer, and the like. The electronic device shown in FIG. 15 is merely an example and should not bring any limitation to the functions and scope of use of the embodiments of the present disclosure.

As shown in FIG. 15, the electronic device 1500 may include a processing device (e. g., central processing unit, graphics processor, etc.) 1501 that may perform various suitable actions and processes in accordance with a program stored in a read only memory (ROM) 1502 or a program loaded into a random-access memory (RAM) 1503 from a storage device 1508. In the RAM 1503, various programs, and data necessary for the operation of the electronic apparatus 1500 are also stored. The processing devices 1501, the ROM 1502, and the RAM 1503 are connected to each other via a bus 1504. An input/output (I/O) interface 1505 is also connected to the bus 1504.

**In** general, the following devices may be connected to the I/O interface 1505: an input device 1506 including, for example, a touch screen, touch pad, keyboard, mouse, camera, microphone, accelerometer, gyroscope, or the like; an output device 1507 including, for example, a liquid crystal display (LCD), a speaker, a vibrator, or the like; a storage device 1508 including, for example, a magnetic tape, a hard disk, or the like; and a communication device 1509. The communication device 1509 may allow the electronic device 1500 to communicate wirelessly or with other devices to exchange data. While FIG. 15 illustrates the electronic device 1500 with a variety of devices, it should be understood that it is not required that all of the illustrated devices be implemented or provided. More or fewer devices may alternatively be implemented or provided.

**In** particular, the processes described above with reference to the flowcharts can be implemented as computer software programs, in accordance with embodiments of the present disclosure. For example, embodiments of the present disclosure include a computer program product including a computer program carried on a computer readable medium. The computer program includes a program code for executing the method as shown in the flowchart. In such an embodiment, the computer program may be downloaded and installed from the network via communications device 1509, installed from storage 1508, or installed from ROM 1502. When the computer program is executed by the processing device 1501, the above-described functions defined in the method according to the embodiment of the present disclosure are executed.

**It** should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination of the foregoing. More specific examples of the computer readable storage medium may include, but are not limited to, an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may also be any computer readable medium (other than the computer readable storage medium) that can communicate, propagate, or transport a program for use by or in connection with an instruction execution system, apparatus, or device. Program code embodied on a computer readable medium may be transmitted using any appropriate medium, including, but not limited to, wireline, optical fiber cable, RF (radio frequency), etc., or any suitable combination of the foregoing.

A further embodiment of the present disclosure further provides a computer-readable storage medium, the computer-readable storage medium storing computer-executable instructions, and when the computer-executable instructions are executed by a processor, the method for processing media content and a method for displaying interactive media content as described in any of the above embodiments are implemented.

A further embodiment of the present disclosure further provides a computer program product including a computer program, the computer program, when executed by the processor, implement the method for media content processing and the method for displaying interactive media content as described in any of the above embodiments.

The computer readable medium may be included in the electronic device, or may exist separately and not be installed in the electronic device.

The computer readable medium carries one or more programs thereon, and when the one or more programs are executed by the electronic device, the electronic device is enabled to execute the method shown in the foregoing embodiments.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including local area network (LAN) or wide area network (WAN) - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product according to various embodiments of the present disclosure. In this regard, each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The units described in the embodiments of the present disclosure may be implemented by means of software or hardware, and the name of the unit does not constitute a limitation on the unit itself in a certain case, for example, a first obtaining unit may also be described as "a unit for obtaining at least two internet protocol addresses". The functions described herein above can be performed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

**In** the context of this disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices, magnetic storage devices, or any suitable combination thereof.

According to a first aspect, a method for media content processing is provided according to one or more embodiments of the present disclosure, including:
displaying a media content generation interface;
obtaining interactive media content generated by a first user on the media content generation interface, wherein the interactive media content includes media content generated by the first user and a preset function control corresponding to a preset interactive operation, and the preset function control includes topic information associated with the interactive media content;
determining at least one second user selected by the first user based on the media content generation interface; and
posting the interactive media content, so that the at least one second user receives first interactive reminder information associated with the preset interactive operation, the first interactive reminder information including the topic information.

According to one or more embodiments of the present disclosure, displaying the media content generation interface includes:
in response to a trigger operation performed by the first user on a media content generation control, switching to the media content generation interface.

According to one or more embodiments of the present disclosure, the media content generation interface includes a preset content acquisition control and the preset function control associated with the interactive operation;
obtaining the interactive media content generated by the first user on the media content generation interface includes:
obtaining to-be-posted media content generated by the first user by triggering the content acquisition control, and obtaining topic information generated by the first user in the preset function control; and
generating the interactive media content according to the to-be-posted media content and the topic information.

According to one or more embodiments of the present disclosure, obtaining the topic information generated by the first user in the preset function control includes:
in response to text content input by the first user in an input box preset in the preset function control, determining the text content as the topic information;
or, the media content generation interface further includes a preset random topic generation control, and obtaining the topic information generated by the first user in the preset function control includes:
in response to a trigger operation performed by the first user on the random topic generation control, generating any preset random topic;
determining the random topic as the topic information.

According to one or more embodiments of the present disclosure, the method further includes before obtaining the topic information generated by the first user in the preset function control,
in response to a trigger operation performed by the first user on a preset interactive operation control in the media content generation interface, displaying the preset function control in the media content generation interface;
or, the method further includes before obtaining the topic information generated by the first user in the preset function control,
in response to a media content obtaining completion operation triggered by the first user, switching to a media content editing interface, the media content editing interface including a preset interactive operation control;
in response to a trigger operation performed by the first user on the interactive operation control in the media content editing interface, displaying the preset function control in the media content generation interface;
or, the method further includes before obtaining the topic information generated by the first user in the preset function control,
the media content generation interface including a function list, and the function list including a preset interactive operation control;
in response to a trigger operation performed by the first user on the interactive operation control in the function list, displaying the preset function control in the media content generation interface.

According to one or more embodiments of the present disclosure, displaying the media content generation interface includes:
displaying target media content in a media content playing interface, the target media content including a target function control, and the target function control including topic information associated with the target media content; and
in response to a trigger operation performed by the first user in the target function control, displaying the media content generation interface;
or, displaying the media content generation interface includes:
obtaining second interactive reminder information associated with the preset interactive operation, the second interactive reminder information including the topic information; and
in response to a trigger operation performed by the first user on the second interactive reminder information, switching to the media content generation interface.

According to one or more embodiments of the present disclosure, obtaining the interactive media content generated by the first user on the media content generation interface includes:
obtaining media content generated by the first user on the media content generation interface; and
generating the interactive media content according to the media content and the topic information associated with the target media content or the topic information included in the second interactive reminder information.

According to one or more embodiments of the present disclosure, the target function control further includes a preset interactive control; and displaying the media content generation interface in response to the trigger operation by the first user in the target function control includes:
in response to a trigger operation performed by the first user on the interactive control, switching to the media content generation interface;
or, displaying the media content generation interface in response to the trigger operation by the first user in the target function control includes:
in response to a trigger operation performed by the first user on a preset display area in the target function control, displaying a content interface corresponding to the topic information, the content interface including a plurality of pieces of media content associated with the topic information and a preset interactive control; and
in response to a trigger operation performed by the first user on the interactive control in the content interface, switching to the media content generation interface.

According to one or more embodiments of the present disclosure, the target function control further includes a preset interactive control; and displaying the media content generation interface in response to the trigger operation by the first user in the target function control includes:
in response to a trigger operation performed by the first user on the interactive control, displaying a preset interactive list, the interactive list including a first control and a second control;
in response to a trigger operation performed by the first user on the first control, switching to a first media content generation interface, the first media content generation interface being configured to generate first interactive media content, wherein, topic information of the first interactive media content is the same as that of the target media content and there is an association relationship between the first interactive media content and the target media content;
in response to a trigger operation performed by the first user on the second control, switching to a second media content generation interface, the second media content generation interface being configured to generate second interactive media content, wherein, topic information of the second interactive media content is the same as that of the interactive media content and there is no association relationship between the second interactive media content and the target media content.

According to one or more embodiments of the present disclosure, determining the at least one second user selected by the first user based on the media content generation interface includes:
displaying identification information of a plurality of users having a preset association relationship with the first user in a preset display area of the media content generation interface;
in response to a selection operation performed by the first user on the identification information of the plurality of users, determining the at least one second user selected by the first user;
or, the preset function control further includes a preset selection control, and determining at least one second user selected by the first user based on the media content generation interface includes:
in response to a trigger operation performed by the first user on the selection control, displaying a user list in the media content generation interface, wherein the user list includes identification information of a plurality of users having a preset association relationship with the first user; and
in response to a selection operation performed by the first user on the identification information of the plurality of users, determining at least one second user selected by the first user.

According to one or more embodiments of the present disclosure, the method further includes before determining the at least one second user selected by the first user based on the media content generation interface,
**displaying** preset first prompt information in the preset function control, the first prompt information being configured to prompt the first user to select at least one second user.

According to one or more embodiments of the present disclosure, the method further includes after determining the at least one second user selected by the first user based on the media content generation interface,
displaying preset second prompt information in the preset function control, the second prompt information being configured to prompt the second user for the number of second users currently selected.

According to one or more embodiments of the present disclosure, the method further includes at least one of the following after posting the interactive media content,
in response to detecting that any one of second users posts media content associated with the topic information based on the interactive media content, sending preset first reminder information to the first user;
in response to detecting that any one of users having a preset association relationship with the first user posts media content associated with the topic information, sending preset first reminder information to the first user; and
in response to detecting that any one of users having no preset association relationship with the first user sends media content associated with the topic information, sending preset second reminder information to the first user.

According to one or more embodiments of the present disclosure, the interactive reminder information is configured to prompt the second user to perform the preset interactive operation to generate media content associated with the topic information.

According to a second aspect, a method for displaying interactive media content is provided according to one or more embodiments of the present disclosure, including:
determining whether a third user has posted media content associated with a topic information of interactive media content based on a preset interactive operation, and obtaining a post result;
determining a display style of a preset function control included in the interactive media content according to the post result; and
displaying interactive media content including the preset function control based on the display style.

According to one or more embodiments of the present disclosure, the determining the display style of the preset function control included in the interactive media content according to the post result includes:
in response to determining that the third user has posted the media content associated with the topic information of the interactive media content based on the preset interactive operation, displaying user identification at a preset position in the preset function control.

According to one or more embodiments of the present disclosure, the method further includes after displaying the interactive media content including the preset function control based on the display style,
in response to a trigger operation performed by the third user on a preset display area in a preset function control corresponding to the interactive media content, displaying a content interface corresponding to the topic information, the content interface including a plurality of pieces of media content associated with the topic information.

According to one or more embodiments of the present disclosure, the method further includes after displaying the content interface corresponding to the topic information:
determining post time and/or a number of cumulative interactions corresponding to each piece of media content associated with the topic information; and
adjusting a display order of the plurality of pieces of media content associated with the topic information in the content interface according to the post time and/or the number of cumulative interactions.

According to one or more embodiments of the present disclosure, the method further includes, after displaying the content interface corresponding to the topic information:
in response to a trigger operation performed by the third user on any piece of media content associated with the topic information, switching to a media content playing interface; and
playing the media content in the media content playing interface.

According to one or more embodiments of the present disclosure, the method further includes after playing the media content in the media content playing interface:
in response to a switching operation performed by the third user for the media content playing interface, switching, in the media content playing interface, to display other media content in the plurality of pieces of media content associated with the topic information.

According to a third aspect, an apparatus for media content processing is provided according to one or more embodiments of the present disclosure, including:
a displaying module configured to display a media content generation interface;
an obtaining module configured to obtain interactive media content generated by a first user on the media content generation interface, wherein the interactive media content includes media content generated by the first user and a preset function control corresponding to a preset interactive operation, and the preset function control includes topic information associated with the interactive media content;
a determining module configured to determine at least one second user selected by the first user based on the media content generation interface; and
a posting module configured to post the interactive media content, so that at least one second user receives first interactive reminder information associated with the preset interactive operation, the first interactive reminder information including the topic information.

According to one or more embodiments of the present disclosure, the displaying module is configured to:
in response to a trigger operation performed by the first user on a media content generation control, switch to the media content generation interface.

According to one or more embodiments of the present disclosure, the media content generation interface includes a preset content acquisition control and the preset function control associated with the interactive operation;
the obtaining module is configured to:
obtain to-be-posted media content generated by the first user by triggering the content acquisition control, and obtain topic information generated by the first user in the preset function control; and
generate the interactive media content according to the to-be-posted media content and the topic information.

According to one or more embodiments of the present disclosure, the obtaining module is configured to:
determine text content as the topic information in response to the text content input by the first user in an input box preset in the preset function control; and

Alternatively, the media content generation interface further includes a preset random topic generation control, and the obtaining module is configured to:
generate any preset random topic in response to a trigger operation performed by the first user on the random topic generation control; and
determine the random topic as the topic information.

According to one or more embodiments of the present disclosure, the apparatus further includes:
a displaying module configured to display the preset function control in the media content generation interface in response to a trigger operation performed by the first user on a preset interactive operation control in the media content generation interface.

Alternatively, the apparatus further includes:
an interface switching module configured to switch to a media content editing interface in response to a media content obtaining completion operation triggered by the first user, where the media content editing interface includes a preset interactive operation control;
a displaying module configured to display the preset function control in the media content generation interface in response to a trigger operation performed by the first user on the interactive operation control in the media content editing interface.

Alternatively, the apparatus further includes:
the media content generation interface includes a function list, and the function list includes a preset interactive operation control;
a displaying module configured to display the preset function control in the media content generation interface in response to a trigger operation performed by the first user on the interactive operation control in the function list.

According to one or more embodiments of the present disclosure, the displaying module is configured to:
display target media content in a media content playing interface, the target media content including a target function control, and the target function control including topic information associated with the target media content;
display the media content generation interface in response to a trigger operation performed by the first user in the target function control.

Alternatively, the displaying module is configured to:
obtain second interactive reminder information associated with the preset interactive operation, the second interactive reminder information including the topic information;
switch to the media content generation interface in response to a trigger operation performed by the first user on the second interactive reminder information.

According to one or more embodiments of the present disclosure, the obtaining module is configured to:
obtain media content generated by the first user on the media content generation interface; and
generate the interactive media content according to the media content and the topic information associated with the target media content or the topic information included in the second interactive reminder information.

According to one or more embodiments of the present disclosure, the target function control further includes a preset interactive control; and the displaying module is configured to:
in response to a trigger operation performed by the first user on the interactive control, switching to the media content generation interface.

Alternatively, the displaying module is configured to:
in response to a trigger operation performed by the first user on a preset display area in the target function control, display a content interface corresponding to the topic information, the content interface including a plurality of pieces of media content associated with the topic information and a preset interactive control; and
in response to a trigger operation performed by the first user on the interactive control in the content interface, switch to the media content generation interface.

According to one or more embodiments of the present disclosure, the target function control further includes a preset interactive control; and the displaying module is configured to:
in response to a trigger operation performed by the first user on the interactive control, display a preset interactive list, the interactive list including a first control and a second control;
in response to a trigger operation performed by the first user on the first control, switch to a first media content generation interface, the first media content generation interface being configured to generate first interactive media content, where, topic information of the first interactive media content is the same as that of the target media content and there is an association relationship between the first interactive media content and the target media content; and
in response to a trigger operation performed by the first user on the second control, switch to a second media content generation interface, the second media content generation interface being configured to generate second interactive media content, where, topic information of the second interactive media content is the same as that of the interactive media content and there is no association relationship between the second interactive media content and the target media content.

According to one or more embodiments of the present disclosure, the determining module is configured to:
display identification information of a plurality of users having a preset association relationship with the first user in a preset display area of the media content generation interface;
in response to a selection operation performed by the first user on the identification information of the plurality of users, determine the at least one second user selected by the first user;

Alternatively, the preset function control further includes a preset selection control, and the determining module is configured to:
in response to a trigger operation performed by the first user on the selection control, display a user list in the media content generation interface, where the user list includes identification information of a plurality of users having a preset association relationship with the first user; and
in response to a selection operation performed by the first user on the identification information of the plurality of users, determine at least one second user selected by the first user.

According to one or more embodiments of the present disclosure, the apparatus further includes:
the displaying module being further configured to preset first prompt information in the preset function control, the first prompt information being configured to prompt the first user to select at least one second user.

According to one or more embodiments of the present disclosure, the apparatus further includes:
the displaying module being further configured to display preset second prompt information in the preset function control, the second prompt information being configured to prompt the second user for the number of second users currently selected.

According to one or more embodiments of the present disclosure, the apparatus further includes a detecting module configured to perform at least one of the following:
the detecting module being configured to send preset first reminder information to the first user, in response to detecting that any one of second users posts media content associated with the topic information based on the interactive media content;
the detecting module being configured to send preset first reminder information to the first user, in response to detecting that any one of users having a preset association relationship with the first user posts media content associated with the topic information;
the detecting module being configured to send preset second reminder information to the first user in response to detecting that any one of users having no preset association relationship with the first user sends media content associated with the topic information.

According to one or more embodiments of the present disclosure, the interactive reminder information is configured to prompt the second user to perform the preset interactive operation to generate media content associated with the topic information.

According to a fourth aspect, an apparatus for displaying interactive media content is provided according to one or more embodiments of the present disclosure, including:
a post result obtaining module configured to determine whether a third user has posted media content associated with a topic information of interactive media content based on a preset interactive operation, and obtain a post result;
a display style determining module configured to determine a display style of a preset function control included in the interactive media content according to the post result; and
a content displaying module configured to display interactive media content including the preset function control based on the display style.

According to one or more embodiments of the present disclosure, the display style determining module is configured to:
in response to determining that the third user has posted the media content associated with the topic information of the interactive media content based on the preset interactive operation, display user identification at a preset position in the preset function control. The apparatus further includes:

A content displaying module configured to display a content interface corresponding to the topic information, in response to a trigger operation performed by the third user on a preset display area in a preset function control corresponding to the interactive media content, the content interface including a plurality of pieces of media content associated with the topic information.

According to one or more embodiments of the present disclosure, the apparatus further includes:
a content determining module configured to determine post time and/or a number of cumulative interactions corresponding to each piece of media content associated with the topic information; and
an adjusting module configured to adjust a display order of the plurality of pieces of media content associated with the topic information in the content interface according to the post time and/or the number of cumulative interactions.

According to one or more embodiments of the present disclosure, the apparatus further includes:
a switching module configured to switch to a media content playing interface in response to a trigger operation performed by the third user on any piece of media content associated with the topic information; and
a playing module configured to play the media content in the media content playing interface.

According to one or more embodiments of the present disclosure, the apparatus further includes:
a playing module configured to switching, in the media content playing interface, to display other media content in the plurality of pieces of media content associated with the topic information, in response to a switching operation performed by the third user for the media content playing interface.

According to a fifth aspect, an electronic device is provided according to one or more embodiments of the present disclosure, including: at least one processor and a memory;
the memory storing computer-executable instructions;
the at least one processor executes the computer-executable instructions stored in the memory, so that the at least one processor implements the method for media content processing according to the first aspect and the possible designs of the first aspect, the second aspect, and the possible designs of the second aspect.

According to a sixth aspect, a computer readable storage medium is provided according to one or more embodiments of the present disclosure, where the computer-readable storage medium stores computer-executable instructions, and when the processor executes the computer-executable instructions, the method for media content processing according to the first aspect and the possible designs of the first aspect or the second aspect and the possible designs of the second aspect is implemented.

According to a seventh aspect, a computer program product is provided according to one or more embodiments of the present disclosure, including a computer program, where the computer program, when executed by a processor, implements the method for media content processing according to the first aspect and the possible designs of the first aspect, the second aspect, and the possible designs of the second aspect.

The above description is only embodiments of this disclosure and an explanation of the technical principles used. Those skilled in the art should understand that the scope of the disclosure involved in this disclosure is not limited to technical solutions composed of specific combinations of the above technical features, but should also covers other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although a plurality of operations are depicted in a specific order, this should not be understood as requiring these operations to be performed in the specific order shown or in a sequential order. In certain environments, multitasking and parallel processing may be advantageous. Similarly, although a plurality of implementation details are included in the above discussion, these should not be construed as limiting the scope of the present disclosure. Some features described in the context of individual embodiments can also be implemented in combination in a single embodiment. Conversely, a plurality of features described in the context of a single embodiment can also be implemented in a plurality of embodiments separately or in any suitable subcombination.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for media content processing, comprising:
displaying a media content generation interface;
obtaining interactive media content generated by a first user in the media content generation interface, wherein the interactive media content comprises media content generated by the first user and a preset function control corresponding to a preset interactive operation, and the preset function control comprises topic information associated with the interactive media content;
determining at least one second user selected by the first user based on the media content generation interface; and
posting the interactive media content, to cause the at least one second user to receive first interactive reminder information associated with the preset interactive operation, the first interactive reminder information comprising the topic information.

2. The method according to claim 1, wherein displaying the media content generation interface comprises:
in response to a trigger operation performed by the first user on a media content generation control, switching to the media content generation interface.

3. The method according to claim 2, wherein the media content generation interface comprises a preset content acquisition control and the preset function control associated with the interactive operation;
obtaining the interactive media content generated by the first user in the media content generation interface comprises:
obtaining to-be-posted media content generated by the first user by triggering the content acquisition control, and obtaining topic information generated by the first user in the preset function control; and
generating the interactive media content according to the to-be-posted media content and the topic information.

4. The method according to claim 3, wherein obtaining the topic information generated by the first user in the preset function control comprises:
in response to text content input by the first user in an input box preset in the preset function control, determining the text content as the topic information;
or, the media content generation interface further comprises a preset random topic generation control, and obtaining the topic information generated by the first user in the preset function control comprises:
in response to a trigger operation performed by the first user on the random topic generation control, generating a preset random topic; and
determining the random topic as the topic information.

5. The method according to claim 2, wherein the method further comprises before obtaining the topic information generated by the first user in the preset function control,
in response to a trigger operation performed by the first user on a preset interactive operation control in the media content generation interface, displaying the preset function control in the media content generation interface;
or, the method further comprises before obtaining the topic information generated by the first user in the preset function control,
in response to a media content obtaining completion operation triggered by the first user, switching to a media content editing interface, the media content editing interface comprising a preset interactive operation control;
in response to a trigger operation performed by the first user on the interactive operation control in the media content editing interface, displaying the preset function control in the media content generation interface;
or, the method further comprises before obtaining the topic information generated by the first user in the preset function control,
the media content generation interface comprising a function list, the function list comprising the preset interactive operation control;
in response to a trigger operation performed by the first user on the interactive operation control in the function list, displaying the preset function control in the media content generation interface.

6. The method according to claim 1, wherein displaying the media content generation interface comprises:
displaying target media content in a media content playing interface, the target media content comprising a target function control, and the target function control comprising topic information associated with the target media content; and
in response to a trigger operation performed by the first user on the target function control, displaying the media content generation interface;
or, displaying the media content generation interface comprises:
obtaining second interactive reminder information associated with the preset interactive operation, the second interactive reminder information comprising the topic information; and
in response to a trigger operation performed by the first user on the second interactive reminder information, switching to the media content generation interface.

7. The method according to claim 6, wherein obtaining the interactive media content generated by the first user on the media content generation interface comprises:
obtaining media content generated by the first user on the media content generation interface; and
generating the interactive media content according to the media content and the topic information associated with the target media content or the topic information comprised in the second interactive reminder information.

8. The method according to claim 6, wherein the target function control further comprises a preset interactive control; and displaying the media content generation interface in response to the trigger operation by the first user in the target function control comprises:
in response to a trigger operation performed by the first user on the interactive control, switching to the media content generation interface;
or, displaying the media content generation interface in response to the trigger operation by the first user in the target function control comprises:
in response to a trigger operation performed by the first user on a preset display area in the target function control, displaying a content interface corresponding to the topic information, the content interface comprising a plurality of pieces of media content associated with the topic information and the preset interactive control; and
in response to a trigger operation performed by the first user on the interactive control in the content interface, switching to the media content generation interface.

9. The method according to claim 6, wherein the target function control further comprises a preset interactive control; and displaying the media content generation interface in response to the trigger operation by the first user in the target function control comprises:
in response to a trigger operation performed by the first user on the interactive control, displaying a preset interactive list, the interactive list comprising a first control and a second control;
in response to a trigger operation performed by the first user on the first control, switching to a first media content generation interface, the first media content generation interface being configured to generate first interactive media content, wherein, topic information of the first interactive media content is the same as that of the target media content and there is an association relationship between the first interactive media content and the target media content; and
in response to a trigger operation performed by the first user on the second control, switching to a second media content generation interface, the second media content generation interface being configured to generate second interactive media content, wherein, topic information of the second interactive media content is the same as that of the interactive media content and there is no association relationship between the second interactive media content and the target media content.

10. The method according to any one of claims 1 to 9, wherein determining the at least one second user selected by the first user based on the media content generation interface comprises:
displaying identification information of a plurality of users having a preset association relationship with the first user in a preset display area of the media content generation interface;
in response to a selection operation performed by the first user on the identification information of the plurality of users, determining the at least one second user selected by the first user;
or, the preset function control further comprises a preset selection control, and determining at least one second user selected by the first user based on the media content generation interface comprises:
in response to a trigger operation performed by the first user on the selection control, displaying a user list in the media content generation interface, wherein the user list comprises identification information of a plurality of users having a preset association relationship with the first user; and
in response to a selection operation performed by the first user on the identification information of the plurality of users, determining at least one second user selected by the first user.

11. The method according to any one of claims 1 to 9, wherein the method further comprises before determining the at least one second user selected by the first user based on the media content generation interface,
displaying preset first prompt information in the preset function control, the first prompt information being configured to prompt the first user to select at least one second user.

12. The method according to any one of claims 1 to 9, wherein the method further comprises after determining the at least one second user selected by the first user based on the media content generation interface,
displaying preset second prompt information in the preset function control, the second prompt information being configured to prompt the second user for the number of second users currently selected.

13. The method according to any one of claims 1 to 9, wherein after posting the interactive media content, the method further comprises at least one of
in response to detecting that any one of second users posts media content associated with the topic information based on the interactive media content, sending preset first reminder information to the first user;
in response to detecting that any one of users having a preset association relationship with the first user posts media content associated with the topic information, sending the preset first reminder information to the first user; and
in response to detecting that any one of users having no preset association relationship with the first user sends media content associated with the topic information, sending preset second reminder information to the first user.

14. The method according to any one of claims 1 to 9, wherein the interactive reminder information is configured to prompt the second user to perform the preset interactive operation to generate media content associated with the topic information.

15. A method for displaying interactive media content, comprising:
determining whether a third user has posted media content associated with topic information of interactive media content based on a preset interactive operation, and obtaining a post result;
determining a display style of a preset function control comprised in the interactive media content according to the post result; and
displaying interactive media content comprising the preset function control based on the display style.

16. The method according to claim 15, wherein the determining the display style of the preset function control comprised in the interactive media content according to the post result comprises:
in response to determining that the third user has posted the media content associated with the topic information of the interactive media content based on the preset interactive operation, displaying user identification at a preset position in the preset function control.

17. The method according to claim 15 or 16, wherein the method further comprises, after displaying the interactive media content comprising the preset function control based on the display style,
in response to a trigger operation performed by the third user on a preset display area in a preset function control corresponding to the interactive media content, displaying a content interface corresponding to the topic information, the content interface comprising a plurality of pieces of media content associated with the topic information.

18. The method according to claim 17, wherein the method further comprises, after displaying the content interface corresponding to the topic information:
determining post time and/or a cumulative number of interactions corresponding to each piece of media content associated with the topic information; and
adjusting a display order of the plurality of pieces of media content associated with the topic information in the content interface according to the post time and/or the cumulative number of interactions.

19. The method according to claim 17, wherein the method further comprises, after displaying the content interface corresponding to the topic information:
in response to a trigger operation performed by the third user on any piece of media content associated with the topic information, switching to a media content playing interface; and
playing the media content in the media content playing interface.

20. The method according to claim 19, wherein the method further comprises, after playing the media content in the media content playing interface:
in response to a switching operation performed by the third user for the media content playing interface, switching, in the media content playing interface, to display other media content in the plurality of pieces of media content associated with the topic information.

21. An apparatus for media content processing, comprising:
a displaying module configured to display a media content generation interface;
an obtaining module configured to obtain interactive media content generated by a first user in the media content generation interface, wherein the interactive media content comprises media content generated by the first user and a preset function control corresponding to a preset interactive operation, and the preset function control comprises topic information associated with the interactive media content;
a determining module configured to determine at least one second user selected by the first user based on the media content generation interface; and
a posting module configured to post the interactive media content, to cause the at least one second user to receive first interactive reminder information associated with the preset interactive operation, the first interactive reminder information comprising the topic information.

22. An apparatus for displaying interactive media content, comprising:
a post result obtaining module configured to determine whether a third user has posted media content associated with a topic information of interactive media content based on a preset interactive operation, and obtain a post result;
a display style determining module configured to determine a display style of a preset function control comprised in the interactive media content according to the post result; and
a content displaying module configured to display interactive media content comprising the preset function control based on the display style.

23. An electronic device, comprising: a processor and a memory;
the memory storing computer-executable instructions;
the processor executes the computer-executable instructions stored in the memory, so that the processor executes the method for media content processing according to any one of claims 1 to 15 or 16 to 20.

24. A computer-readable storage medium, wherein the computer-readable storage medium stores computer-executable instructions therein, and when executing the computer-executable instructions, the processor implements the method for media content processing according to any one of claims 1 to 15 or 16 to 20.

25. A computer program product, comprising a computer program, wherein the computer program, when executed by a processor, implements the method for media content processing according to any one of claims 1 to 15 or 16 to 20.
